(19) Europäisches Patentamt
European Patent Office
Office européen des brevets

(11) Veröffentlichungsnummer: **0 490 385 A2**

(12) # EUROPÄISCHE PATENTANMELDUNG

(21) Anmeldenummer: **91121365.0**

(51) Int. Cl.[5]: **C08G 73/06**

(22) Anmeldetag: **12.12.91**

(30) Priorität: **14.12.90 DE 4040092**

(43) Veröffentlichungstag der Anmeldung:
**17.06.92 Patentblatt 92/25**

(84) Benannte Vertragsstaaten:
**DE FR GB**

(71) Anmelder: **HOECHST AKTIENGESELLSCHAFT**
**Postfach 80 03 20**
**W-6230 Frankfurt am Main 80(DE)**

(72) Erfinder: **Heitz, Walter, Prof.Dr.**
**Am Schmidtborn 5**
**W-3575 Kirchhain 1(DE)**
Erfinder: **Niessner, Norbert, Dr.**
**Buhl'scher Hof 10**
**W-6721 Friedelsheim(DE)**

(54) **Poly(1,4-pyridiniumsalze) und ihre Verwendung.**

(57) Verfahren zur Herstellung Von Poly(1,4-pyridiniumsalzen) der Formel I,

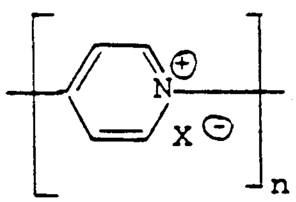

(I)

wobei 4-Brom- oder 4-Chlorpyridin in einem organischen Lösungsmittel mit einer anorganischen Verbindung bei einer Temperatur im Bereich Von 20 bis 100 °C umgesetzt werden. Das Anion $X^-$ der anorganischen Verbindung weist ein mittleres Molekulargewicht über 100 auf. Das Kation der anorganischen Verbindung bildet bei der Umsetzung ein in organischen Lösungsmitteln schwerlösliches Chlorid oder Bromid. Der Polymerisationsgrad n beträgt mindestens 5. Die Reaktion wird in Gegenwart eines Katalysators oder eines Gemisches mehrerer Katalysatoren durchgeführt. Als anorganische Verbindungen werden vorzugsweise Alkali-, Erdalkali-, Silber-, Blei- oder Quecksilbersalze eingesetzt.

EP 0 490 385 A2

Fig. 1

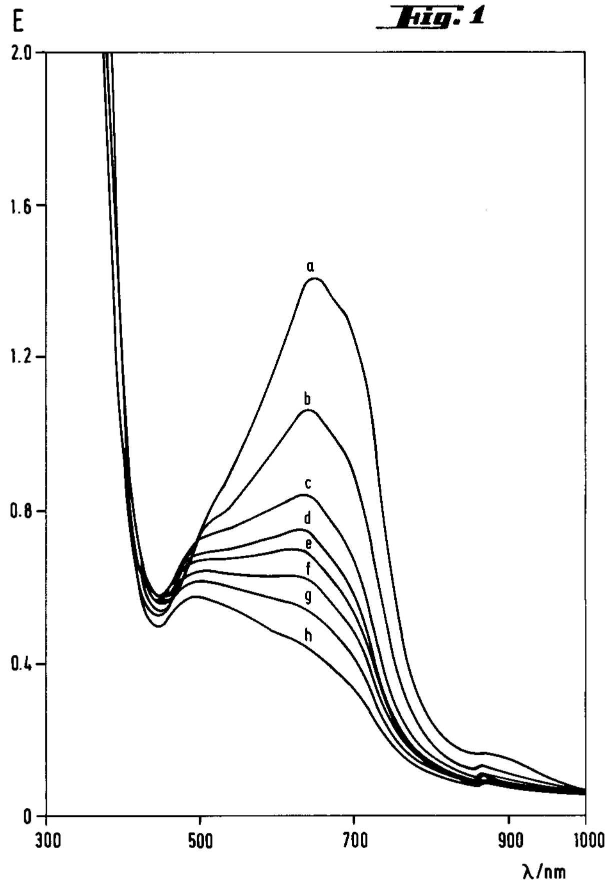

Polymere Materialien haben sich in den letzten 50 Jahren außerordentlich schnell entwickelt und zählen mittlerweile zu den wichtigsten Materialien, sowohl für industrielle als auch für allgemeine Anwendungsgebiete. Neue Polymere mit außerordentlichen optischen und elektrischen Eigenschaften sind besonders attraktiv für die moderne Elektronik, welche sich mehr und mehr in Richtung der Optoelektronik entwickelt. Die Optoelektronik spielt eine zentrale Rolle in der Datenverarbeitung und allgemein in allen Gebieten, wo große Mengen an Daten gehandhabt werden müssen.

In den letzten Jahren wurden zahlreiche Versuche unternommen, Polymere mit hohen Brechungsindices und niedrigen Dispersionen herzustellen.

Es hatte sich gezeigt, daß Polymere der Formel (II) mit Aminstrukturen eine hohe Kristallinität und ähnliche chemische und physikalische Eigenschaften wie anorganische Salze aufweisen und ferner gute optische Eigenschaften besitzen - (G. Wegner et al., Angew. Chem. Advanced Materials 101, 1148 (1989)).

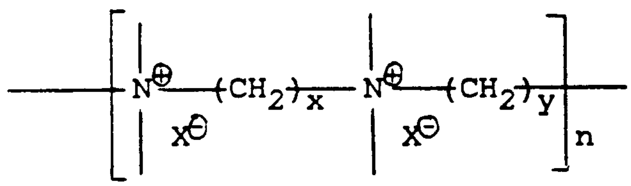

(II)

Durch Variation des Anions $X^-$ ist es möglich, Materialien mit hohen Brechungsindizes und niedrigen optischen Dispersionen herzustellen (F. Kremer, L. Domingues, W.H. Meyer, G. Wegner, Polymer 30, 2023 (1989)). Derartige Polymere erwiesen sich als interessant bezüglich ihrer optischen Eigenschaften und ihrer Leitfähigkeit. Bei genügend langen Polymerketten, könnten sie ferner als selbstorganisierende Materialien interessant sein.

Die Nachteile dieser Materialien sind insbesondere in ihrer Unlöslichkeit in vielen organischen Solventien zu sehen. Für eine Reihe von Anwendungen ist es aber notwendig mit Lösungsmitteln zu arbeiten. In polaren Solventien wie Wasser oder Methanol sind die Polypyridiniumsalze zwar löslich, allerdings unterliegt das Polymer in Wasser einem Abbau unter Bildung der Pyridonstruktur.

(II)

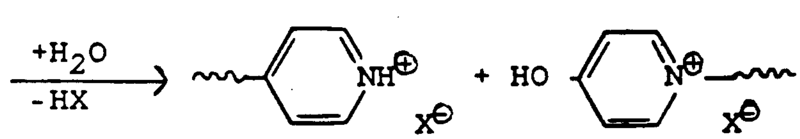


Es bestand daher die Aufgabe, Polypyridiniumsalze mit hohen Brechungsindices und niedrigen optischen Dispersionen und einer guten Löslichkeit in organischen Lösungsmitteln bereitzustellen.

Poly(1,4-pyridiniumchlorid und Poly(1,4-pyridiniumbromid) zeigen eine gute Löslichkeit in Wasser, während sie in weniger polaren Lösungsmitteln unlöslich sind. Es wurde nun gefunden, daß die Löslichkeit dieser Substanzen auch für solche Lösungsmittel erhöht werden kann, wenn man Poly(1,4-pyridiniumchlorid) bzw. Poly(1,4-pyridiniumbromid) in Salze überführt, wobei die Anionen eine bestimmte Größe bzw. ein genügend hohes Molekulargewicht (Molmasse) aufweisen müssen.

Die vorliegende Erfindung betrifft Poly(1,4-pyridinium)salze (I), die in organischen Lösungsmitteln löslich sind, sowie ihre Herstellung und ihre Verwendung.

Die erfindungsgemäßen Salze lassen sich aus 4-Brom- oder 4-Chlorpyridin durch Umsetzung mit einer anorganischen Verbindung in einem organischen Lösungsmittel bei Temperaturen im Bereich von 20 bis 100 °C erhalten. Das Anion $X^-$ der anorganischen Verbindung muß bei dem erfindungsgemäßen Verfahren ein mittleres Molekulargewicht über 100 besitzen. Das Kation der anorganischen Verbindung muß bei dieser Reaktion ein in der organischen Phase schwerlösliches, vorzugsweise unlösliches, Chlorid oder Bromid bilden.

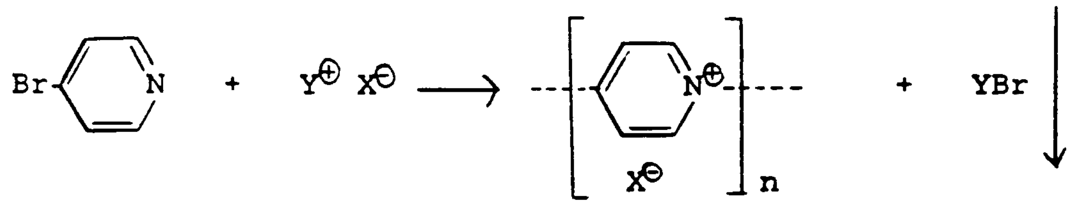

(I)

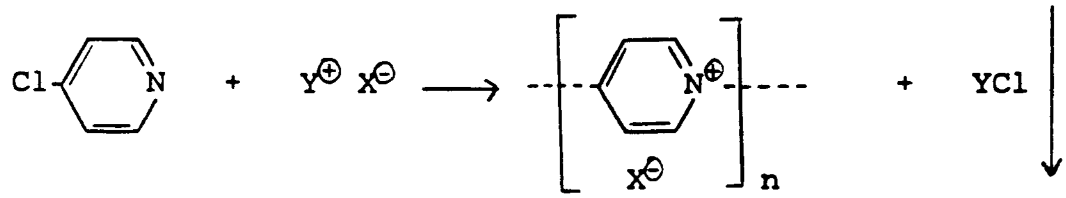

(I)

$X^-$ = Anion der anorganischen Verbindung
$Y^+$ = Kation der anorganischen Verbindung
n = Polymerisationsgrad

Beispiele für anorganische Verbindungen, die sich für das erfindungsgemäße Verfahren eignen, sind Natriumtetraphenylborat, Silberhexafluoroantimonat, Quecksilberhexafluoroarsenat, Natriumhexachloroplatinat, Calciumhexachlorocadmat, Natriumjodid, Natriumtetrafluoroborat, Natriumtetrabromocadmat sowie Calciumtetraiodocadmat.

Bei der Umsetzung von 4-Chlor- bzw. 4-Brompyridin mit derartigen anorganischen Verbindungen kommt es zu einem Anionenaustausch, wobei sich Poly(1,4-pyridiniumsalze) bilden und das Kation der anorganischen Verbindung mit den Chlorid- bzw. Bromidion eine in der organischen Phase schwerlösliche Verbindung bildet und ausfällt. Das Pyridiniumsalz bleibt in der organischen Phase gelöst, so daß eine Abtrennung von dem betreffenden schwerlöslichen Salz möglich ist.

Um eine genügende Löslichkeit der Pyridiniumverbindung in organischen Lösungsmitteln zu erreichen, müssen die Anionen der betreffenden anorganischen Verbindungen eine bestimmte Größe bzw. ein bestimmtes Molekulargewicht aufweisen. Es wurde nun gefunden, daß Anionen mit einem Molekulargewicht größer oder gleich 100 derartige lösliche Pyridiniumverbindungen zu bilden vermögen. Als Kationen kommen insbesondere Alkali- und Erdalkalimetallionen in Frage, aber auch Silber-, Blei- und Quecksilberionen.

Vorzugsweise werden äquimolare Mengen von 4-Brom- oder 4-Chlorpyridin mit den entsprechenden anorganischen Verbindungen zur Reaktion gebracht. Gegebenenfalls wird das Halogenpyridin in einem Unter- oder Überschuß eingesetzt.

Das Reaktionsgemisch wird auf eine Temperatur im Bereich von 20 bis 100°C erhitzt und für mehrere Stunden, vorzugsweise 10 bis 48 Stunden, gerührt. Die Reaktionszeit ist abhängig von der Temperatur, so daß bei höheren Temperaturen mit kürzeren Reaktionszeiten gearbeitet werden kann, während bei niedrigeren Temperaturen eine längere Zeit benötigt wird. Das erfindungsgemäße Verfahren ist bei Temperaturen von -20 bis 120°C anwendbar, vorzugsweise von 20 bis 100°C, wobei die Obergrenze durch den Molekulargewichtsabbau und die Untergrenze durch die Reaktionszeit festgelegt ist.

Die Reaktion wird gegebenenfalls unter Zusatz eines Katalysators oder eines Gemisches mehrerer Katalysatoren durchgeführt. Mögliche Katalysatoren sind beispielsweise Palladium-II-acetat sowie Tri(o-tolyl-phosphan). Ferner kommen noch Übergangsmetallphosphine als Katalysatoren in Betracht. Normalerweise werden katalytische Mengen eingesetzt, wobei die Obergrenze bei 2 Mol-% liegt. Bei größeren Zusätzen an Katalysatoren könnten Schwierigkeiten bei der späteren Abtrennung vom Reaktionsprodukt auftreten.

Der Polymerisationsgrad n der erfindungsgemäßen Poly(1,4-pyridiniumsalze) der Formel (I) liegt im allgemeinen bei mindestens 5, vorzugsweise über 15. Der Polymerisationsgrad ist abhängig von den eingesetzten Lösungsmitteln sowie von den Temperaturverhältnissen bei denen die Reaktion durchgeführt wurde.

Das erfindungsgemäße Verfahren wird allgemein in allen Lösungsmitteln in denen die Poly(1,4-pyridiniumsalze) löslich sind und die gebildete anorganische Verbindung unlöslich ist, durchgeführt. Bevorzugte Lösungsmittel sind hierbei Nitrobenzol, Tetrahydrofuran, Acetonitril, Dioxan und Ether wie Diethylether, n-Propylether, Isopropylether oder n-Butylether.

Die Polypyridiniumsalze der Formel (I) besitzen ein Absorptionsmaximum bei 649 nm und bilden mit

organischen Lösungsmitteln tiefblaue Lösungen.

Ihr Absorption im sichtbaren Licht weist auf eine lange Resonanzwellenlänge hin. Dies bedeutet, daß die chinoide Struktur bei der Beschreibung der Poly(1,4-pyridinium)salze eine wichtige Rolle spielt.

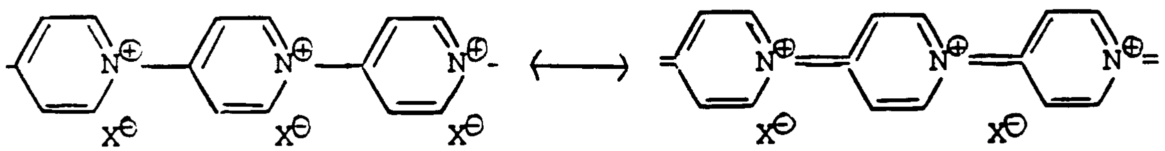

Die chinoide Strukture kann durch geeignete Endgruppen, beispielsweise Neopentylgruppen, noch weiter stabilisiert werden.

Figur 1 zeigt eine Abnahme des Absorptionsmaximums von Poly(1,4-pyridinium-tetraphenylborat) (Nr. 13) nach Zugabe kleiner Mengen Wasser, wobei die Absorption bei 649 nm abnimmt, während die Absorption bei 500 nm fast konstant bleibt. Mit zunehmendem Wassergehalt bewegt sich das Absorptionsmaximum zu höheren Frequenzen hin (von 649 nm (a) zu 618 nm (f)). Bei weiterer Zugabe von Wasser kommt es zur Spaltung der Salze. Die Absorption bei 500 nm ist dem dimeren 4-Bromo-(4-pyridinium-tetraphenylborat) zuzuordnen.

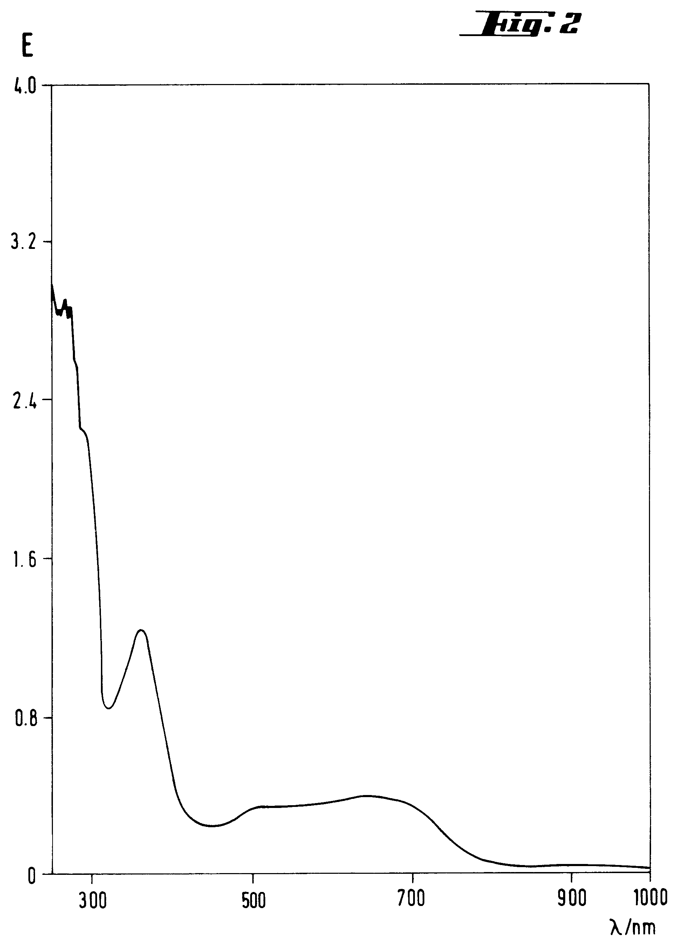

Figur 2 zeigt das komplette optische Spektrum von Poly(1,4-pyridinium-tetraphenylborat) (Nr. 13).

Die erfindungsgemäßen Polypyridiniumsalze eignen sich für die Anwendung im Bereich der nichtlinearen Optik. Des weiteren können sie für die Herstellung von optischen Filtern, Fotoleitern und Fotoresists eingesetzt werden.

Beispiel 1

Poly(1,4-pyridinium-hexafluoroantimonat)

12,3 g (63,3 mmol) Brompyridin-Hydrochlorid wurden in 250 ml entgastem Wasser gelöst, auf 0 °C abgekühlt, und diese Lösung wurde anschließend bis zur neutralen Reaktion mit eisgekühlter 2n KOH versetzt. Die erhaltene Suspension wurde zweimal mit Diethylether extrahiert, die organische Phase zweimal mit Wasser gewaschen und bei -25 °C über Natriumsulfat getrocknet. Nach Abtrennung des Natriumsulfats wurde die Lösung bei der gleichen Temperatur über 3Å-Molekularsieb aufbewahrt.

3,00 g (19 mmol) 4-Brompyridin und 6,52 g (19 mmol) Silberhexachloroantimonat wurden in 50 ml THF 9 Stunden mit Argon als Schutzgas unter Rückfluß erhitzt. Nach Abschluß der Reaktion wurden 3,61 g (ca. 19 mmol) AgBr abfiltriert. Nach Entfernung des Lösungsmittels wurden 5,1 g (86 %) des Polymers erhalten. Die hergestellten Pyridiniumsalze wurden jeweils mit Hilfe von IR, $^{1}H$- und $^{13}C$-NMR (Lösungsmittel DMSO-$d_6$) identifiziert.

Beispiel 2

Poly(1,4-pyridinium-tetraphenylborat)

1,54 g (9,7 mmol) 4-Brompyridin (hergestellt gemäß Beispiel 1), 3,34 g (9,7 mmol) Natriumtetraphenylborat und 80 ml Nitrobenzol wurden bei 25 °C 20 Stunden gerührt. Das gebildete Natriumbromid wurde unter Argon abfiltriert und das Nitrobenzol bei vermindertem Druck abdestilliert. Das ungereinigte blaue Polymer wurde 3 Tage mit Cyclohexan extrahiert.

Die Ausbeute lag bei 72 %.

Synthese von Poly(pyridinium)salzen gemäß Beispiel 2

Reaktionsbedingungen: Äquimolare Mengen an 4-Brompyridin (A) und Natriumtetraphenylborat (B) wurden in Nitrobenzol (S) gelöst und bei unterschiedlichen Temperaturen für 20 Stunden gerührt.

In einigen Fällen wurde Palladium-II-acetat (cat.) und Tri(o-tolylphosphan) (top) als Co-Katalysator zugegeben.

Tabelle 1

1) Dioxan wurde statt Nitrobenzol als Lösungsmittel verwendet
2) THF wurde statt Nitrobenzol als Lösungsmittel verwendet

| Nr. | A/mmol | B/mmol | cat./mmol | top/mmol | S/ml | Temp. °C | Ausbeute % |
|---|---|---|---|---|---|---|---|
| 1 | 8,9 | 8,9 | 0,22 | 0,67 | 40 | 65 | 66 |
| 2 | 7,0 | 7,0 | 0,22 | 0,67 | 30 1) | 65 | 81 |
| 3 | 9,2 | 9,2 | 0,22 | 0,67 | 40 2) | 65 | 0 |
| 5 | 13,5 | 13,5 | 0,36 | 1,08 | 50 1) | 80 | 80 |
| 6 | 9,2 | 9,2 | 0,22 | 0,67 | 60 | 20 | 0 |
| 7 | 8,9 | 8,9 | 0,22 | 0,67 | 40 1) | 20 | 0 |
| 8 | 5,3 | 5,3 | 0,11 | 0,33 | 40 | 100 | 78 |
| 10 | 5,8 | 5,8 | - | - | 30 | 100 | 75 |
| 11 | 14,2 | 14,2 | 0,36 | 1,08 | 55 | 80 | 88 |
| 12 | 9,3 | 9,3 | - | - | 40 | 80 | 70 |
| 13 | 9,7 | 9,7 | - | - | 80 | 20 | 72 |

Optische Spektroskopie der Poly(pyridinium)salze von Tabelle 1

Lösungsmittel: Tetrahydrofuran
Quarz-Küvette , d = 1 cm

Tabelle 2

E = Absorption
1) Konzentration c = mmol des Monomers (Einheiten pro Volumen)
2) Molarer Absoptionskoeffizient, normiert auf eine Monomereinheit

| Nr. | $c^{1)}$ (mmol $l^{-1}$) | $E_{max}$ | $\lambda_{max}$ (nm) | $\epsilon^{2)}$ ($l\ mol^{-1}\ cm^{-1}$) |
|---|---|---|---|---|
| 1 | 0,629 | 1,924 | 642 | 3060 |
| 2 | 1,110 | 2,158 | 648 | 1950 |
| 5 | 0,906 | 0,871 | 525 | 961 |
| 8 | 0,369 | 0,638 | 635 | 1730 |
| 10 | 0,472 | 0,395 | 625 | 1070 |
| 12 | 0,642 | 1,970 | 637 | 3070 |
| 13 | 0,503 | 1,035 | 649 | 2060 |

Inhärente Viskositäten ($\eta_{inh.}$)
T = 30°C
Lösungsmittel Nitrobenzol

| Nr. | $\eta_{inh.}$ (dl $g^{-1}$) |
|---|---|
| 1 | 0,030 |
| 2 | 0,026 |
| 5 | 0,033 |
| 8 | 0,014 |
| 10 | 0,020 |
| 12 | 0,036 |
| 13 | 0,021 |

Figur 1: Spektrum im sichtbaren und nahen Infrarot-Bereich von Poly(pyridinium-tetraphenylborat) Nr. 13 in THF. (a): 330 mg/l in THF, (b)-(h): Spektrum nach wiederholter Zugabe von 0,2 µl Wasser.

Figur 2: Spektrum im sichtbaren und nahen Infrarot-Bereich von Poly(pyridinium-tetraphenylborat) 150 mg/l in THF.

**Patentansprüche**

1. Verfahren zur Herstellung von Poly(1,4-pyridiniumsalzen) der Formel (I),

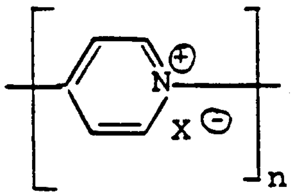

(I).

dadurch gekennzeichnet, daß 4-Brom- oder 4-Chlorpyridin in einem organischen Lösungsmittel mit einer anorganischen Verbindung bei einer Temperatur im Bereich von 20 bis 100 ° C umgesetzt wird, wobei das Anion $X^-$ der anorganischen Verbindung ein mittleres Molekulargewicht über 100 aufweist und das Kation bei der Umsetzung ein in organischen Lösungsmitteln schwerlösliches Chlorid oder Bromid bildet.

2. Verfahren nach Anspruch 1, dadurch gekennzeichnet, daß die Reaktion in Gegenwart eines Katalysators, oder eines Gemisches mehrerer Katalysatoren durchgeführt wird.

3. Verfahren nach Anspruch 1, dadurch gekennzeichnet, daß als anorganische Verbindungen Alkali-, Erdalkali-, Silber-, Blei- oder Quecksilbersalze eingesetzt werden.

4. Verfahren nach Anspruch 1, dadurch gekennzeichnet, daß das Anion $X^-$ der anorganischen Verbindung ein Hexachloroantimonat- oder ein Tetraphenylboration ist.

5. Verfahren nach Anspruch 2, dadurch gekennzeichnet, daß als Katalysator Palladium-II-acetat und/oder Tri(o-tolylphosphan) eingesetzt wird.

6. Verfahren nach Anspruch 1, dadurch gekennzeichnet, daß äquimolare Mengen an 4-Chlor- oder 4-Brompyridin und der anorganischen Verbindung eingesetzt werden.

7. Verfahren nach Anspruch 1, dadurch gekennzeichnet, daß ein Poly-(1,4-pyridiniumsalz) mit einem Polymerisationsgrad n von mindestens 5 hergestellt sind.

8. Poly(1,4-pyridiniumsalz) der Formel (I),

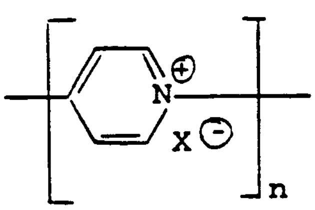

(I)

dadurch gekennzeichnet, daß der Polymerisationsgrad n mindestens 5 beträgt und das mittlere Molekulargewicht des Anions $X^-$ größer oder gleich 100 ist.

9. Poly(1,4-pyridiniumsalz) nach Anspruch 8, dadurch gekennzeichnet, daß $X^-$ ein Hexachloroantimonat- oder ein Tetraphenylboration ist.

10. Poly(1,4-pyridiniumsalz) nach Anspruch 8, dadurch gekennzeichnet, daß das Salz in organischen Lösungsmitteln löslich ist.

11. Verwendung des Poly(1,4-pyridiniumsalzes) des Anspruchs 8 für die nichtlineare Optik.

Fig. 1

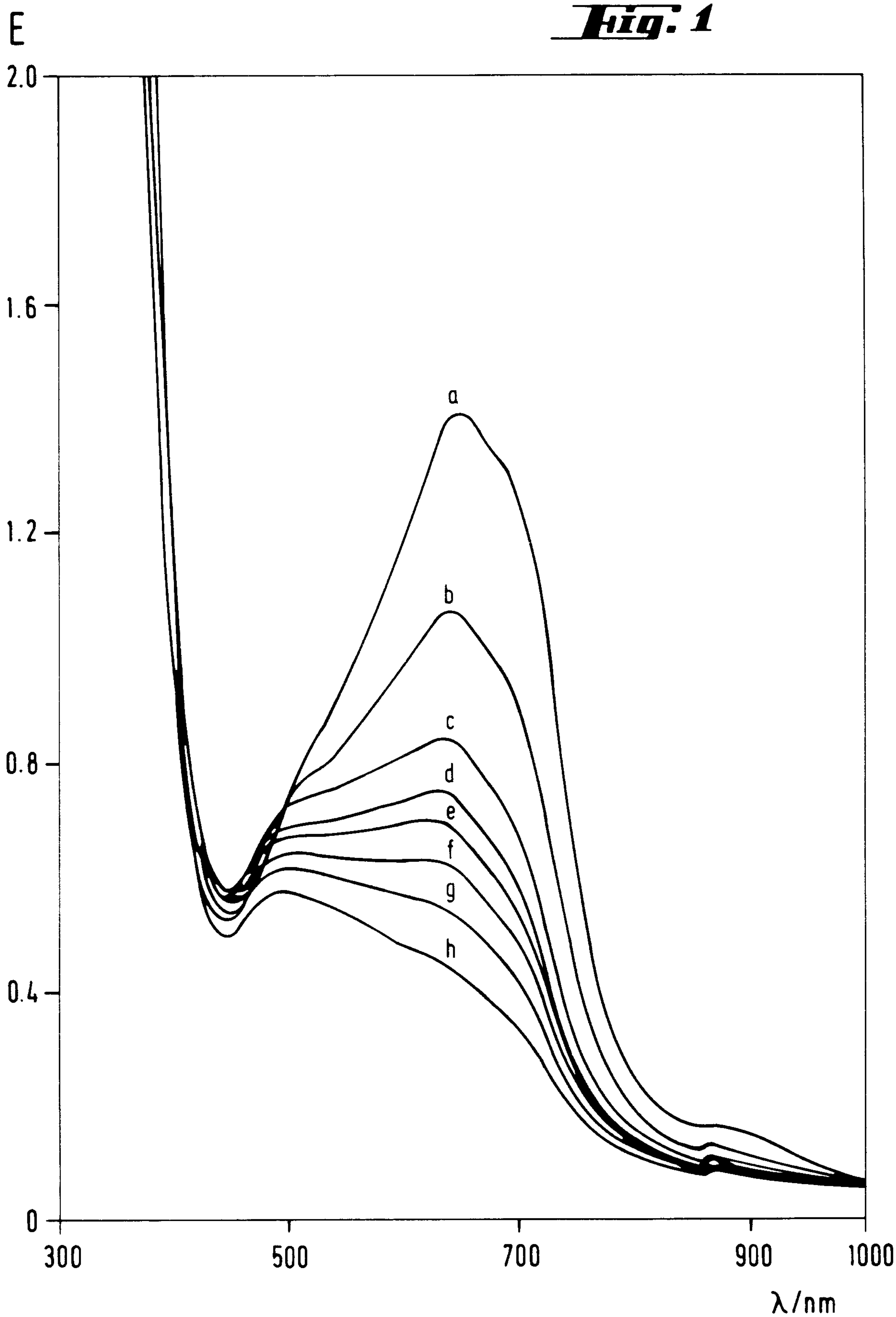

Fig. 2